# EUROPÄISCHE PATENTANMELDUNG

(11) **EP 0 739 669 A2**
(43) Veröffentlichungstag der Anmeldung: **30.10.1996**
(21) Anmeldenummer: 96105879.9
(22) Anmeldetag: 15.04.1996
(51) Int. Cl.: B23B 3/06

(54) **Drehmaschine mit Abstützung für schlanke Werkstücke**

(30) Priorität: 24.04.1995 DE 19515042
(71) Anmelder: Traub AG, 73262 Reichenbach (DE)
(72) Erfinder: Forst, Heinz, 73773 Aichwald (DE)
(74) Vertreter: Goetz, Rupert, Dipl.-Ing.

(57) **Zusammenfassung**

Die Drehmaschine ist insbesondere zum Verarbeiten stangenförmigen Werkstoffs vorgesehen und hat einen Spindelstock (12), in dem eine Arbeitsspindel (14) mit einer Werkstückspannvorrichtung (Spannzange 16) gelagert ist, und mindestens einen Werkzeugträger (38), der in einem Arbeitsraum der Drehmaschine verfahrbar ist. Am Spindelstock (12) ist eine Konsole (50) befestigt, die in einem Abstand vor der Werkstückspannvorrichtung (16) einen Ausleger (70) trägt. Am Ausleger (70) ist eine zusätzliche Abstützung (90) für schlanke Werkstücke (W) gehalten, die zwischen einer Arbeitsstellung zum Angreifen an einer von der Arbeitsspindel (14) entfernten Stelle des Werkstücks (W) und einer Ruhestellung verstellbar ist. Der Ausleger (70) ist über die Konsole (50) derart mit dem Spindelstock (12) verbunden, daß er quer zur Achse (Z) der Arbeitsspindel (14) verstellbar und dadurch mit der Abstützung (90) aus dem Arbeitsraum herausbewegbar ist.

## Beschreibung

Die Erfindung betrifft eine Drehmaschine nach dem Oberbegriff des Anspruchs 1.

Schlanke Werkstücke lassen sich mit einer Zerspanungsleistung, die der Leistungsfähigkeit moderner Drehmaschinen entspricht, häufig nur dann bearbeiten, wenn sie nicht nur in einer Arbeitsspindel eingespannt sondern in einem axialen Abstand von dieser zusätzlich abgestützt sind. Deshalb sind Drehmaschinen zum Bearbeiten schlanker Werkstücke üblicherweise mit einem Reitstock ausgestattet, der auf einer Längsführung in Richtung der Achse der Arbeitsspindel (Z-Achse) verfahrbar und festklemmbar ist und als Abstützung für das von der Arbeitsspindel entfernte Ende des Werkstücks einen Zentrierkegel trägt. Dieser kann eine sogenannte Reitstockspitze sein, die in ein vorgebohrtes konisches Loch am Ende des Werkstücks eingreift, oder ein Hohlkegel, der das Ende des Werkstücks übergreift.

Wenn das Werkstück einer zusätzlichen Abstützung nicht bedarf, wird der Reitstock bekannter Drehmaschinen in Richtung der Z-Achse aus dem Arbeitsraum heraus in eine Ruhestellung bewegt, in der er möglichst wenig stört. In jedem Fall beansprucht ein solcher Reitstock jedoch Platz, der bei manchen Bearbeitungsaufgaben besser für die Unterbringung einer zusätzlichen Bearbeitungseinheit genutzt werden könnte. Außerdem ist die mit einem Reitstock erreichbare Genauigkeit der Zentrierung schlanker Werkstücke nur dann zufriedenstellend, wenn für den Reitstock eine trotz ihrer notwendigerweise erheblichen Länge sehr genaue Führung zur Verfügung steht, die zusammen mit dem auf ihr in wechselnden Stellungen festgesetzten Reitstock eine in sich und in bezug auf die übrigen Baugruppen der Drehmaschine weitgehend starre Einheit bildet. Diese Voraussetzungen lassen sich nur schwer mit den an Drehmaschinen, insbesondere zum Verarbeiten stangenförmigen Werkstoffs, üblicherweise gestellten Anforderungen vereinbaren, zu denen auch gehört, daß weniger schlanke Werkstücke, die einer zusätzlichen Abstützung nicht bedürfen, mit hohen Zerspanungsleistungen bearbeitet werden sollen, die sich häufig nur durch gleichzeitigen Einsatz mehrerer Werkzeugträger erzielen lassen.

Durch eine Gestaltung der eingangs beschriebenen Gattung, von der die Erfindung ausgeht, wird der Spindelstock zum gemeinsamen tragenden Bauteil für jegliche Zentrierung und Abstützung des Werkstücks, nämlich einerseits wie üblich über die im Spindelstock gelagerte Arbeitsspindel und andererseits über die vom Spindelstock getragene Abstützung. Unvermeidliche, belastungs- und temperaturbedingte Verformungen des Maschinenbetts bleiben deshalb ohne jeden Einfluß auf die Genauigkeit der Zentrierung und Abstützung des Werkstücks. Alle das Werkstück stützenden Kräfte werden auf kürzestem Weg in den Spindelstock eingeleitet.

Eine Werkzeugmaschine, die im wesentlichen der eingangs beschriebenen Gattung entspricht, ist aus der DE 29 27 602 A1 bekannt. Dort ist an der Oberseite des Spindelstocks eine Konsole angeordnet, die sich in ihrer Betriebsstellung als waagerecht auskragender Träger parallel zur Arbeitsspindel über den Arbeitsraum der Maschine erstreckt. Aus dieser Stellung ist die Konsole um eine waagerechte, im hinteren oberen Bereich des Spindelstocks angeordnete Achse nach oben in eine Ruhestellung schwenkbar. Die Konsole weist eine Längsführung auf, längs der ein nach unten ragender Ausleger verstellbar ist. An diesem ist eine Pinole geführt, die in Betriebsstellung der Konsole mit der Arbeitsspindel gleichachsig angeordnet ist und ein der Arbeitsspindel zugewandtes Formstück als zusätzliche Abstützung für ein an der Arbeitsspindel gehaltenes Werkstück trägt. Die Pinole ist mittels einer im Ausleger angeordneten, doppeltwirkenden Kolbenzylindereinheit axial verstellbar. Um Platz zum Entnehmen eines Werkstücks zu schaffen, wird das Formstück durch Zurückziehen der Pinole von der Arbeitsspindel axial wegbewegt, und dann wird die Konsole nach oben geschwenkt. Nach dem Einsetzen eines neuen Wekstücks wird die Konsole wieder nach unten in ihre Betriebsstellung geschwenkt, wobei sie sich auf Zentrierleisten an der Oberseite des Spindelstocks auflegt. Danach wird die Pinole wieder ausgefahren, sodaß ihr Formstück das neue Werkstück axial gegen die Arbeitsspindel drückt. Diese beiden bei jedem Werkstückwechsel erforderlichen Bewegungen haben sich kumulierende Toleranzen in der Betriebsstellung des Formstücks zur Folge, die eine genaue Zentrierung jedenfalls dann ausschließen, wenn sich auf den Zentrierleisten Schmutz, beispielsweise ein bei der Werkstückbearbeitung angefallener Span, abgelagert hat.

Der Erfindung liegt deshalb die Aufgabe zugrunde, eine Drehmaschine der eingangs beschriebenen Gattung mit einer leicht und schnell aus dem Arbeitsraum entfernbaren und dennoch besonders genau zentrierenden zusätzlichen Abstützung für schlanke Werkstücke zu versehen.

Die Aufgabe ist erfindungsgemäß mit den Merkmalen des Anspruchs 1 gelöst. Vorteilhafte Weiterbildungen der Erfindung ergeben sich aus den Unteransprüchen. Die Weiterbildung gemäß Anspruch 2 ist von besonderem Vorteil, wenn die Drehmaschine unmittelbar am Spindelstock geführte Werkzeugträger, insbesondere Stechschlitten zum Formdrehen, aufweist.

Ausführungsbeispiele der Erfindung werden im folgenden anhand schematischer Zeichnungen mit weiteren Einzelheiten erläutert. Es zeigen:
- Fig. 1: eine Drehmaschine mit einer ersten Ausführungsform einer Abstützung für schlanke Werkstücke, in Draufsicht,
- Fig. 2: die Ansicht in Richtung des Pfeils II in Fig. 1,
- Fig. 3: einen vergrößerten Ausschnitt aus Fig. 1,
- Fig. 4: einen vergrößerten Ausschnitt aus Fig. 2,
- Fig. 5: einen Ausschnitt entsprechend Fig. 3, jedoch in Ruhestellung der Abstützung,
- Fig. 6: einen Ausschnitt entsprechend Fig. 4, ebenfalls in Ruhestellung der Abstützung,
- Fig. 7: eine der Fig. 3 entsprechende Draufsicht einer zweiten Ausführungsform einer erfindungsgemäßen Abstützung und
- Fig. 8: den Schnitt in der senkrechten Ebene VIII-VIII in Fig. 7

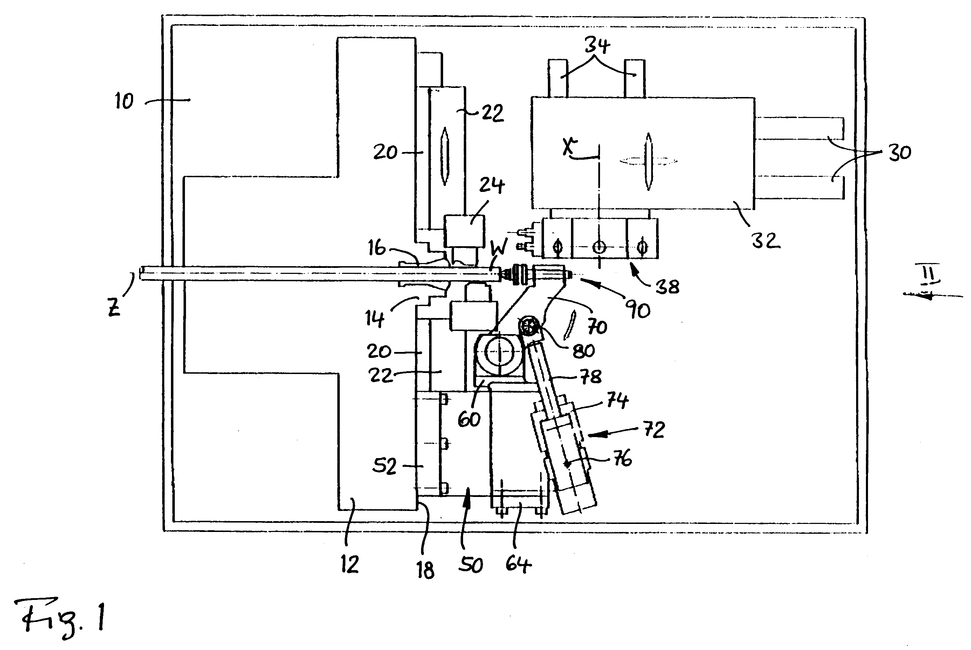

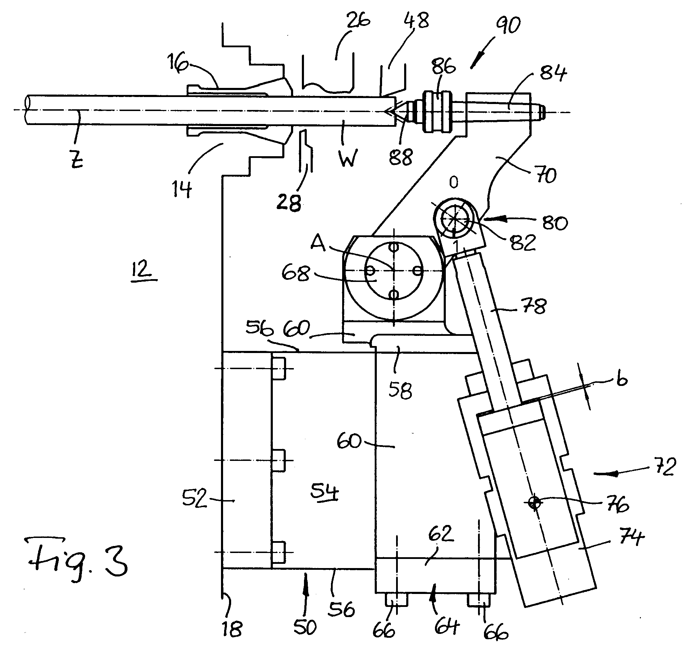

Die dargestellte Drehmaschine hat ein Maschinenbett 10 und einen darauf befestigten Spindelstock 12, in dem eine Arbeitsspindel 14 mit einer Spannzange 16 zum Spannen stangenförmigen Werkstoffs gelagert ist. Der Spindelstock 12 hat eine senkrechte Stirnwand 18, die gemäß Fig. 1, 3, 5 und 7 den Arbeitsraum der Drehmaschine nach links begrenzt. An der Stirnwand 18 sind vier Führungen 20 befestigt, deren Achsen S und S' radial zur Achse Z der Arbeitsspindel 14 angeordnet sind. In den Führungen 20 ist je ein als Schlitten ausgebildeter Werkzeugträger 22 geführt, der einen Werkzeughalter 24 zum Einspannen eines Drehmeißels 26 bzw. Abstechwerkzeugs 28 trägt.

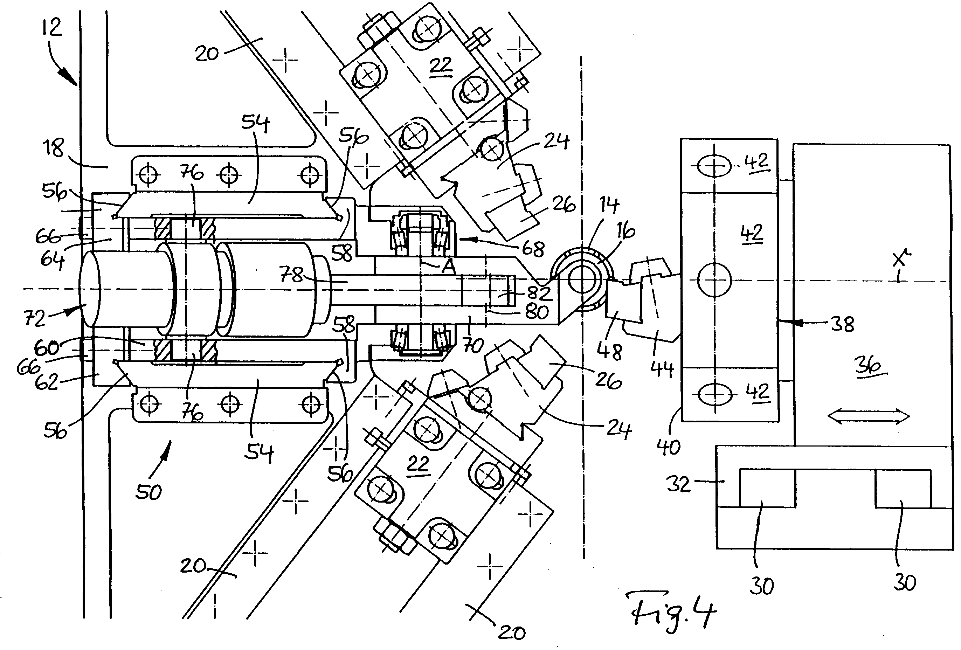

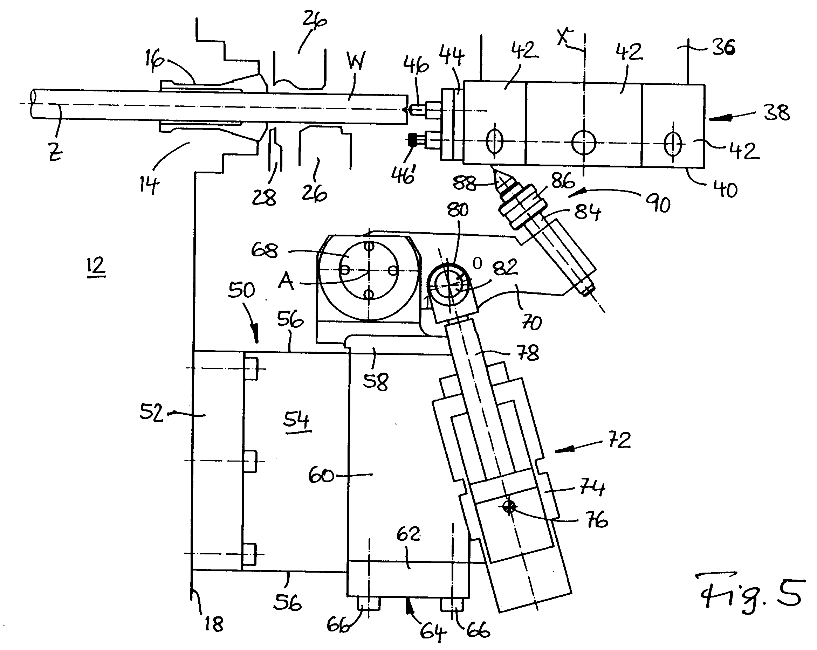

Auf Längsführungen 30 des Maschinenbetts 10 ist ein Längsschlitten 32 geführt, und auf diesem ist an Querführungen 34 ein Querschlitten 36 in Richtung einer zur Z-Achse normalen X-Achse verschiebbar geführt. Am Querschlitten 36 ist ein weiterer Werkzeugträger 38 geführt, im dargestellten Beispiel ein Sternrevolver, der um die X-Achse drehbar ist und eine zur X-Achse normale Stirnfläche 40 sowie acht zur X-Achse parallele Aufspannflächen 42 für je einen Werkzeughalter 44 aufweist. Ein in Fig. 1 und 5 dargestellter Werkzeughalter 44 ist als Zwillingswerkzeughalter ausgebildet und mit einem Bohrer 46 sowie einem Gewindebohrer 46' bestückt. Ein Beispiel für einen Werkzeughalter 44 mit einem Drehmeißel 48, der erheblich über die Stirnfläche 40 des Werkzeugträgers 38 hinausragt, ist in Fig. 4, 6 und 8 dargestellt.

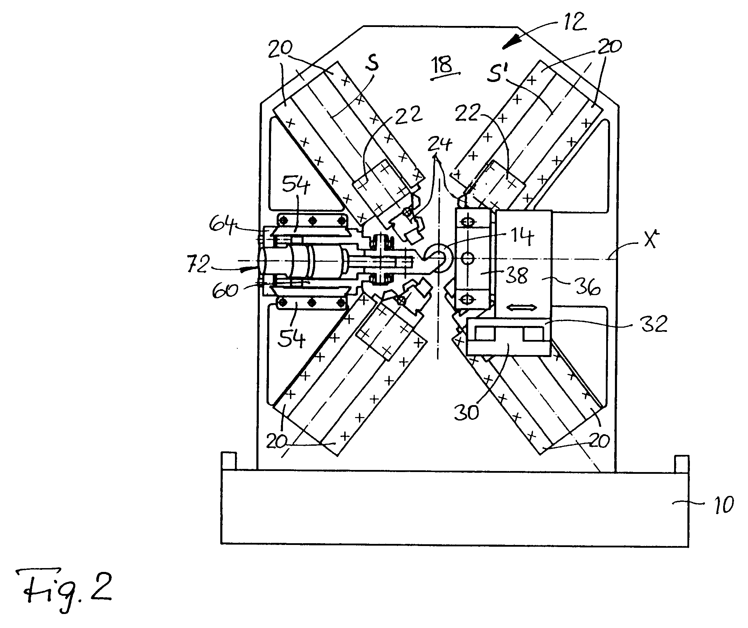

Die radialen, also zur Z-Achse normalen Führungen 20 sind gegen die Waagerechte vorzugsweise um 50 bis 55°, gemäß Fig. 2 um 52,5° geneigt, so daß zwischen ihnen an der Stirnwand 18 des Spindelstocks 12 in Höhe der Arbeitsspindel 14 verhältnismäßig große Flächen freibleiben. Dies hat einerseits den Vorteil, daß der als Sternrevolver ausgebildete Werkzeugträger 38 mit jeweils einem von ihm getragenen Werkzeug, beispielsweise dem Drehmeißel 48, ein an der Arbeitsspindel 14 gespannt gehaltenes Werkstück W bei Bedarf in unmittelbarer Nähe der Spannzange 16 bearbeiten kann, etwa ebenso wie dies mit Werkzeugen an den als Stechschlitten ausgebildeten Werkzeugträgern 22 möglich ist. Andererseits wird die in Fig. 2, 4, 6 und 8 links neben der Arbeitsspindel 14 freigehaltene Fläche dazu genutzt, eine Konsole 50 an der Stirnwand 18 starr zu befestigen.

Im dargestellten Beispiel ist die Konsole 50 so gestaltet, daß sie sich auch nachträglich an eine vorhandene Drehmaschine anschrauben läßt. In Richtung der X-Achse gesehen ist die Konsole 50 C-förmig mit einer senkrechten Rückenplatte 52, die an der Stirnwand 18 festgeschraubt ist, und zwei übereinander waagerecht angeordneten, plattenförmigen Führungskörpern 54, die sich parallel zur Z-Achse von der Rückenplatte 52 weg erstrecken. An jedem der Führungskörper 54 sind zwei Führungen 56 ausgebildet. Die beiden inneren, dem Arbeitsraum der Drehmaschine zugewandten Führungen 56 der beiden Führungskörper 54 werden von je einer Pratze 58 übergriffen, die an einem Lagerkörper 60 ausgebildet ist. Die beiden übrigen Führungen 56 werden von Pratzen 62 übergriffen, die an einem Klemmkörper 64 ausgebildet sind. Der Klemmkörper 64 ist mit dem Lagerkörper 60 mittels Schrauben 66 verspannt; auf diese Weise ergänzen sich die beiden im Profil trapezförmigen Führungskörper 54 mit dem Lagerkörper 60 und dem Klemmkörper 64 zu einer im Verhältnis zu ihrem geringen Platzbedarf sehr starren Baugruppe.

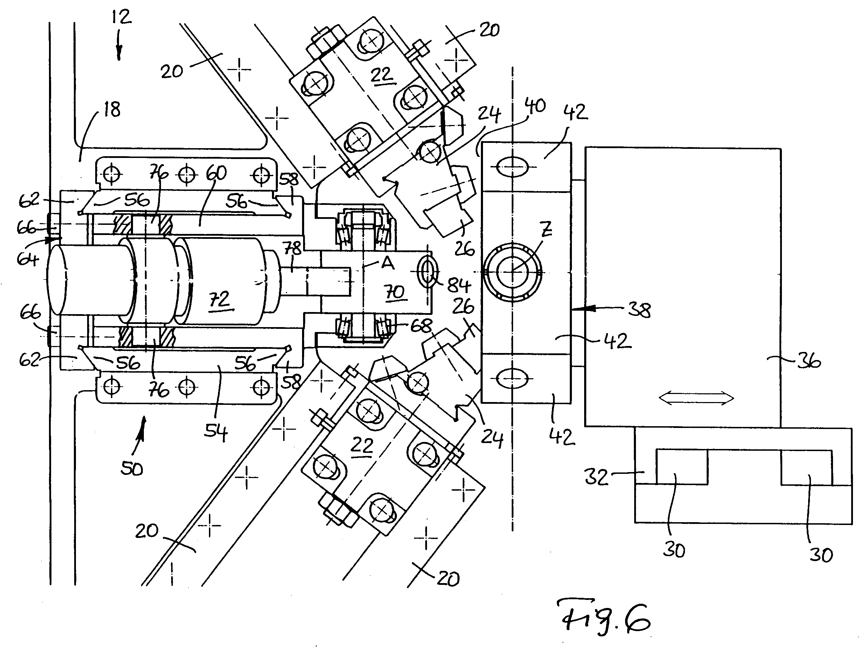

Der Lagerkörper 60 ist durch ein Schwenklager 68 mit einem schwenkbaren Ausleger 70 verbunden. Die Achse A des Schwenklagers 68 ist normal zur X-Z-Ebene; da im dargestellten Beispiel die X-Achse ebenso wie die Z-Achse waagerecht ist, steht die Schwenkachse A senkrecht im Raum. Der Ausleger 70 ist mittels einer Betätigungseinheit 72 um ungefähr 90° zwischen einer Betriebsstellung gemäß Fig. 1 bis 4 und einer Ruhestellung gemäß Fig. 5 und 6 schwenkbar. Die Betätigungseinheit 72 ist im dargestellten Beispiel eine hydraulische Zylinder-Kolbeneinheit mit einem Zylinder 74, der durch ein Gelenk 76 mit dem Lagerkörper 60 verbunden ist, und einer Kolbenstange 78, die durch ein Gelenk 80 mit dem Ausleger 70 verbunden ist. Beide Gelenke 76 und 80 haben zur Schwenkachse A parallele Gelenkachsen; das Gelenk 80 enthält einen zwischen den Stellungen "0" und "1" um 180° drehbaren, sich selbsthemmend in seiner Stellung haltenden Exzenter 82.

Der Ausleger 70 weist an seinem freien Ende eine konische Bohrung auf, in der ein Schaft 84 von der genormten Form eines Morsekegels steckt. Am Schaft 84 ist mittels eines Axialdrucklagers 86 ein Zentrierkonus 88 drehbar gelagert. Dargestellt ist ein Spitzkegel, der in eine vorbereitete Zentrierbohrung an der freien Stirnfläche des zu bearbeitenden Werkstücks W eingreift; falls eine solche Zentrierbohrung nicht vorhanden ist, wird ein Zentrierkonus 88 in Form eines Hohlkegels verwendet. In jedem Fall bildet der Zentrierkonus 88 zusammen mit dem Schaft 84 und dem Lager 86, die ihn mit dem Ausleger 70 verbinden, eine Abstützung 90 für das Werkstück W.

Die Betriebsstellung der Abstützung 90 ist gemäß Fig. 1 bis 4 so gewählt, daß die Drehachse des Zentrierkonus 88 mit der Z-Achse übereinstimmt und die Betätigungseinheit 72 nicht vollständig gestreckt ist, sondern deren Kolben von der benachbarten Stirnwand des Zylinders 74 einen kleinen Abstand b hat. Dadurch wird unabhängig von Längentoleranzen und Wärmedehnungen des Werkstücks W für eine definierte, von der Kolbenfläche und dem hydraulischen Druck im Zylinder 74 abhängige Kraft gesorgt, mit der die Abstützung 90 in axialer Richtung gegen das Werkstück W drückt. Um die Übereinstimmung der Achse des Zentrierkonus 88 mit der X-Achse zu erreichen, wird der Lagerkörper 60 beim Einrichten der Drehmaschine in derjenigen Stellung festgeklemmt, in der die Schwenkachse A in derselben zur Z-Achse normalen Ebene liegt wie die von der Abstützung 90 abgestützte Stelle am freien Ende des Werkstücks W.

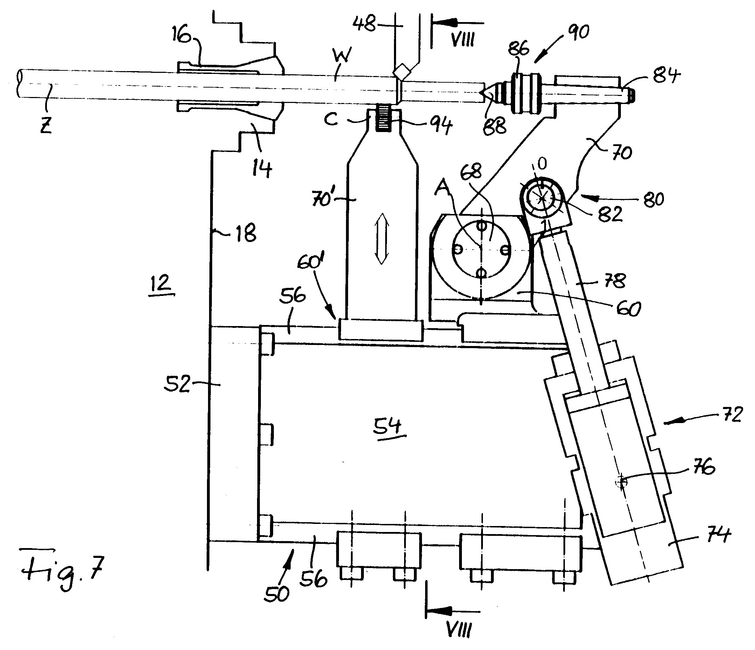

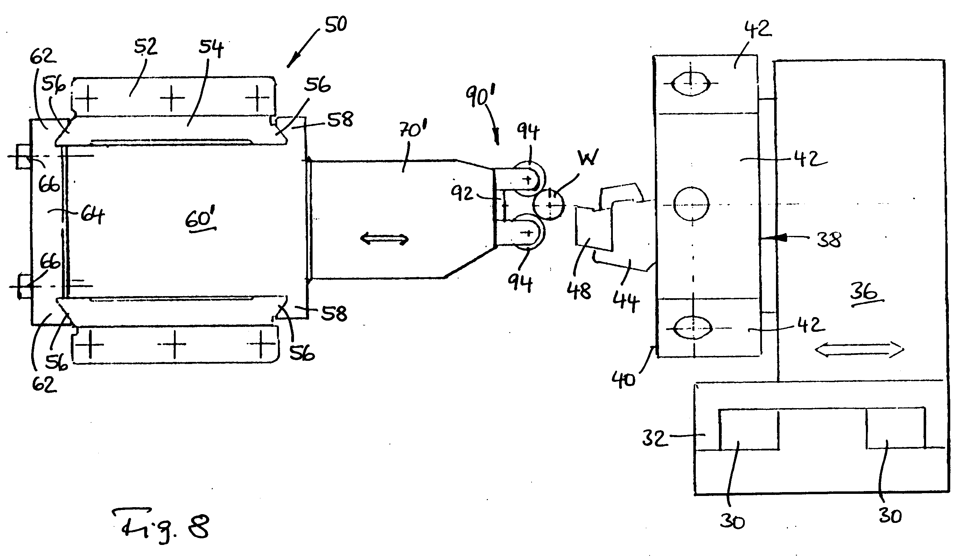

Das Ausführungsbeispiel gemäß Fig. 7 und 8 unterscheidet sich von dem in Fig. 1 bis 6 dargestellten dadurch, daß an einem zusätzlichen Lagerkörper 60' ein zusätzlicher Ausleger 70' geradlinig normal zur Z-Achse, vorzugsweise parallel zur X-Achse, verschiebbar und festklemmbar geführt ist. Am freien Ende des zusätzlichen Auslegers 70' ist eine zusätzliche Abstützung 90' für das Werkstück W angeordnet. Gemäß Fig. 7 und 8 gehören zur zusätzlichen Abstützung 90' ein Lagerbock 92, in dem zwei senkrecht übereinander angeordnete Rollen 94 um je eine zur Z-Achse parallele Achse C frei drehbar gelagert sind. Der zusätzliche Ausleger 70' ist entweder von Hand aus- und einfahrbar und am Lagerkörper 60 festklemmbar oder mittels einer Betätigungseinheit, die wiederum eine hydraulische Zylinder-Kolbeneinheit oder ein elektrischer Servomotor sein kann. Die in Fig. 7 und 8 dargestellte Betriebsstellung des zusätzlichen Auslegers 70' und der von ihm getragenen zusätzlichen Abstützung 90' ist so gewählt, daß die Rollen 94 mit einer leichten Vorspannung gegen die Mantelfläche des Werkstücks W drücken und dieses daran hindern, der beispielsweise vom Drehmeißel 48 auf das Werkstück ausgeübten Schneidkraft auszuweichen.

Beiden dargestellten Ausführungsbeispielen ist gemeinsam, daß die Abstützung 90 sich, wie in Fig. 5 und 6 dargestellt, aus dem Arbeitsraum der Drehmaschine quer zur Z-Achse soweit herausbewegen läßt, daß ein in Richtung der Z- und X-Achse bewegbarer Werkzeugträger wie zum Beispiel der als Sternrevolver ausgebildete Werkzeugträger 38 ohne Behinderung durch die Abstützung 90 eingesetzt werden kann, um beispielsweise mit dem einen oder anderen der beiden in Fig. 5 dargestellten Bohrer 46 und 46' am freien Ende des Werkstücks W zu arbeiten. Entsprechendes gilt beim zweiten Ausführungsbeispiel gemäß Fig.7 und 8 auch für die zusätzliche Abstützung 90'.

## Patentansprüche

1. Drehmaschine, insbesondere zum Verarbeiten stangenförmigen Werkstoffs, mit
- einem Spindelstock (12), in dem eine Arbeitsspindel (14) mit einer Werkstückspannvorrichtung (Spannzange 16) gelagert ist,
- mindestens einem Werkzeugträger (38), der in einem Arbeitsraum der Drehmaschine verfahrbar ist,
- einer Konsole (50), die am Spindelstock (12) abgestützt ist,
- einem in einem Abstand vor der Werkstückspannvorrichtung (16) an der Konsole (5) verstellbar angeordneten Ausleger (70) und
- einer Abstützung (90) für schlanke Werkstücke (W), die am Ausleger (70) gehalten ist und wahlweise eine Betriebsstellung zum Angreifen an einer von der Arbeitsspindel (14) entfernten Stelle des Werkstücks (W) oder einer Ruhestellung außerhalb des Arbeitsraumes einnimmt,
dadurch gekennzeichnet, daß
- die Konsole (50) am Spindelstock (12) fest angeordnet ist und
- der Ausleger (70) an der Konsole (50) quer zur Achse (Z) der Arbeitsspindel (14) verstellbar ist, so daß
- die Abstützung (90) durch Verstellender des Auslegers (70) gegenüber der Konsole (50) aus dem Arbeitsraum heraus in die Ruhestellung bewegbar ist.

2. Drehmaschine nach Anspruch 1,
dadurch gekennzeichnet, daß die Konsole (50) an einer den Arbeitsraum begrenzenden Stirnwand (18) des Spindelstocks (12) ungefähr in Höhe der Arbeitsspindel (14) befestigt ist.

3. Drehmaschine nach Anspruch 1 oder 2,
dadurch gekennzeichnet, daß der Ausleger (70) an einem Lagerkörper (60) gehalten ist, der an der Konsole (50) parallel zur Arbeitsspindel (14) verstellbar befestigt ist.

4. Drehmaschine nach Anspruch 3,
dadurch gekennzeichnet, daß
- die Konsole (50) zwei parallele Führungskörper (54) aufweist, an denen je zwei Führungen (56) ausgebildet sind,
- der Lagerkörper (60) zwei Pratzen (58) aufweist, die je eine Führung (56) der beiden Führungskörper (54) übergreifen, und
- zwei weitere Pratzen (62), die je eine der beiden übrigen Führungen (56) übergreifen, an einem Klemmkörper (64) ausgebildet sind, der mit dem Lagerkörper (60) verspannbar ist.

5. Drehmaschine nach Anspruch 3 oder 4,
dadurch gekennzeichnet, daß
- der Ausleger (70) mit dem Lagerkörper (60) durch ein Schwenklager (68) mit zu einer Ebene (X-Z-Ebene), in welcher der Werkzeugträger (38) längs- und querbeweglich ist, normaler Schwenkachse (A) verbunden ist, und
- der Ausleger (70) so einstellbar ist, daß die Schwenkachse (A) und die von der Abstützung (90) abgestützte Stelle des Werkstücks in einer gemeinsamen, zur Arbeitsspindel (14) normalen Querebene (A-X-Ebene) liegen.

6. Drehmaschine nach einem der Ansprüche 3 bis 5,
dadurch gekennzeichnet, daß der Lagerkörper (60) und der Ausleger (70) mit einer teleskopartig ausfahrbaren Betätigungseinheit (72) durch je ein Gelenk (76,80) verbunden sind, von denen eines einen dreheinstellbaren Exzenter (82) zum Einstellen einer Vorspannung der Betätigungseinheit (72) aufweist.

7. Drehmaschine nach Anspruch 3 oder 4,
dadurch gekennzeichnet, daß der Ausleger (70) am Lagerkörper (60) normal zur Achse (Z) der Arbeitsspindel (14) verschiebbar geführt ist.

8. Drehmaschine nach einem der Ansprüche 1 bis 7,
dadurch gekennzeichnet, daß die Abstützung (90) einen am Ende des Auslegers (70) gelagerten Zentrierkonus (88) aufweist.

9. Drehmaschine nach einem der Ansprüche 1 bis 7,
dadurch gekennzeichnet, daß die Abstützung (90) zwei am Ende des Auslegers (70) gelagerte Rollen (94) aufweist.

10. Drehmaschine nach Anspruch 3,
dadurch gekennzeichnet, daß
- an der Konsole (50) zwei Lagerkörper (60, 60') parallel zur Arbeitsspindel (14) verstellbar befestigt sind,
- an einem dieser Lagerkörper (60) ein erster Ausleger (70), der eine erste, stirnseitig am Werkstück (W) angreifende Abstützung (90) trägt, schwenkbar gelagert ist, und
- an dem anderen Lagerkörper (60') ein zweiter Ausleger (70'), der eine zweite, umfangsseitig am Werkstück (W) angreifende Abstützung (90') trägt, normal zur Achse (Z) der Arbeitsspindel (14) verschiebbar geführt ist.
